# EUROPÄISCHE PATENTSCHRIFT

(11) **EP 2 767 712 B1**
(45) Veröffentlichungstag und Bekanntmachung des Hinweises auf die Patenterteilung: **25.09.2019**
(21) Anmeldenummer: 14154483.3
(22) Anmeldetag: 10.02.2014
(51) Int. Cl.: F03D 80/00

(54) **VERKLEIDUNG FÜR EINE GONDEL EINER WINDENERGIEANLAGE**
CLADDING FOR A NACELLE OF A WIND TURBINE
HABILLAGE POUR UNE NACELLE D'ÉOLIENNE

(30) Priorität: 13.02.2013 DE 102013002528
(43) Veröffentlichungstag der Anmeldung: 20.08.2014
(73) Patentinhaber: Nordex Energy GmbH, 22419 Hamburg (DE)
(72) Erfinder: Bielefeldt, Lars Christian, 18057 Rostock (DE)
(74) Vertreter: Hauck Patentanwaltspartnerschaft mbB

(56) Entgegenhaltungen:
- EP-A1- 2 314 865
- CN-A- 101 655 072
- DE-A1-102006 001 931
- US-A1- 2011 243 726

## Beschreibung

Die vorliegende Erfindung betrifft die Verkleidung für eine Gondel einer Windenergieanlage, kurz auch als Gondelverkleidung bezeichnet.

Die Verkleidung einer Gondel einer Windenergieanlage hat einerseits die Aufgabe, die elektrischen und mechanischen Aufbauten im Inneren der Gondel vor Umwelteinflüssen und hier insbesondere vor Regen, Schnee und Eis zu schützen. Andererseits muss die Gondel der Windenergieanlage bei einem möglichst geringen Eigengewicht ausreichend stabil sein, um die Windlasten aufnehmen zu können.

Aus DE 10 2006 001 931 A1 ist ein Gehäuse für eine Gondel einer Windenergieanlage bekannt geworden, das mit einem Rahmen und an dem Rahmen gehaltenen Wandelementen ausgebildet ist. Im zusammengesetzten Zustand wird der von dem Rahmen und den Wandelementen gebildete Innenraum durch mindestens eine gekrümmte Fläche begrenzt.

Aus EP 2 314 865 A1 ist eine Windenergieanlage mit einem verbesserten Gondelgehäuse bekannt geworden. Das mehrteilige Gehäuse ist am Ende des Mastes befestigt. Das Gehäuse besitzt ein Bodenteil mit einer Öffnung, die einen Zustieg in den Turm bzw. einen Überstieg aus dem Turm in das Maschinenhaus erlaubt. Das Unterteil des Gehäuses ist mit einem Oberteil verbunden, das auf seiner vom Turm abgewandten Seite eine große Dachöffnung besitzt, die über einen Deckel verschlossen ist. Das bekannte Gehäuse ist selbsttragend und jedes seiner Bauteile besitzt umlaufende Rippen, die sich von einem Rand des Teils zu dem gegenüberliegend Rand erstrecken.

Aus EP 2 085 612 A2 ist ein zweischaliges Gehäuse für die Gondel einer Windenergieanlage bekannt geworden, dessen Ober- und Unterschale jeweils einen an der Außenseite umlaufenden Flansch besitzen, entlang dem die Schalen miteinander verbunden sind.

Aus US 2011/0243726 A1 ist die Verkleidung für eine Gondel einer Windenergieanlage bekannt geworden, die eine aus Streben bestehende Rahmenkonstruktion besitzt, die mit Abdeckplatten versehen ist.

Aus DE 2008 027 498 ist ein Gehäuse für die Gondel einer Windenergieanlage bekannt geworden, das mit einer Tragstruktur aus Rohren oder Streben versehen ist, an der Verkleidungssegmente, beispielsweise aus glasfaserverstärktem Kunststoff, vorgesehen sind.

Aus CN 101 655 072 A ist eine schalenförmige Verkleidung bekannt geworden, bei der Anbringungspunkte auf der Innenseite der Schale vorgesehen sind.

Der Erfindung liegt die Aufgabe zugrunde, eine Gondelverkleidung für eine Windenergieanlage bereitzustellen, die ausreichend stabil ist und eine einfache Montage erlaubt.

Erfindungsgemäß wird die Aufgabe durch eine Verkleidung für eine Gondel mit den Merkmalen aus Anspruch 1 gelöst. Vorteilhafte Ausgestaltungen bilden den Gegenstand der Unteransprüche.

Die erfindungsgemäße Verkleidung ist vorgesehen und bestimmt für eine Gondel einer Windenergieanlage. Die Verkleidung besitzt mehrere miteinander verbindbare Verkleidungsteile, die in ihrem verbundenen Zustand eine selbsttragende Verkleidung der Gondel der Windenergieanlage bilden. Die selbsttragende Verkleidung kann an einer Tragstruktur der Gondel der Windenergieanlage, beispielsweise an deren Maschinenträger und/oder Generatorträger, befestigt werden. Erfindungsgemäß weist jedes Verkleidungsteil ein Wandelement auf, in das mindestens eine sich von einem ersten Rand des Wandelements zu einem zweiten Rand des Wandelements erstreckende Strebe eingearbeitet ist. Die erfindungsgemäß vorgesehene Strebe ist in das Wandelement eingearbeitet und somit mit diesem verbunden. Jede der Streben weist zwei Enden auf, die jeweils einem Rand des Wandelements zugeordnet sind. Bezogen auf die Längsrichtung der Strebe, erstreckt sich das Wandelement, quer zur Längsrichtung, bevorzugt beidseitig der Strebe und die Strebe ist bevorzugt in das Wandelement eingearbeitet. An dem jeweiligen Ende der Strebe ist jeweils ein Verbindungsschuh zur Verbindung mit einem Verbindungsschuh eines benachbarten Verkleidungsteils vorgesehen. Bei der erfindungsgemäßen Verkleidung werden also die Verkleidungsteile über Verbindungsschuhe miteinander verbunden, die jeweils an den Enden der Streben angeordnet sind. Der vorgesehene Aufbau von Verkleidungsteilen mit eingearbeiteten Streben, die über Verbindungsschuhe miteinander zu einer selbsttragenden Verkleidung verbunden werden, schafft eine leicht zu montierende, stabile, selbsttragende Gondelverkleidung.

In einer bevorzugten Ausgestaltung besteht jedes Verkleidungsteil aus einem Faser-Kunststoff-Verbund, insbesondere aus einem glasfaserverstärkten Kunststoff. Bei dem aus Faser-Kunststoff-Verbund hergestellten Verkleidungsteil besteht sowohl das Wandelement als auch die in dieses eingearbeitete Strebe aus dem Faser-Kunststoff-Verbund. Die Strebe kann hierbei hohl oder massiv ausgebildet sein, wobei die massive Strebe beispielsweise auch mit einem Schaum gefüllt sein kann.

In einer bevorzugten Ausgestaltung ist der Verbindungsschuh aus Metall, insbesondere aus Stahl hergestellt. Die Verbindung von zwei Verkleidungsteilen über ihre randseitig angeordneten Verbindungsschuhe kann bei aus Metall hergestellten Verbindungsschuhen unproblematisch über Schrauben, Bolzen oder andere Verbindungsmittel erfolgen. Durch die Verwendung von Metall muss beim Zusammenbau der Verkleidungsteile nicht auf die Struktur des Faser-Kunststoff-Verbunds Rücksicht genommen werden. So können beispielsweise Schraubverbindungen mit definierten Momenten angezogen werden, die planmäßig vorgespannte Schraubverbindungen zwischen den Verkleidungsteilen besitzen. Erfindungsgemäß besitzt der Verbindungsschuh ein Verankerungselement, das mindestens zwei in die Strebe hineinragende Ankerplatten aufweist, die in die Strebe eingearbeitet und/oder einlaminiert sind. Zusätzlich können die Ankerplatten auch mit dem Faser-Kunststoff-Verbund verklebt sein.

In einer bevorzugten Ausgestaltung ist der Verbindungsschuh einteilig und weist eine Flanschplatte zur Verbindung mit einem Verbindungsschuh eines angrenzenden Verkleidungsteils auf. Die Flanschplatte bildet hierbei den Teil des Verbindungsschuhs, der mit dem angrenzenden Verbindungsschuh flächig in Kontakt steht und verbunden wird.

In einer alternativen Ausgestaltung ist der Verbindungsschuh mehrteilig und weist ein Rahmenteil auf, das bündig mit der Strebe abschließt. Zusätzlich ist ein Flanschadapter vorgesehen, der mit dem Rahmenteil verbindbar ist und in seinem verbundenen Zustand eine Flanschfläche bereitstellt.

In einer bevorzugten Ausgestaltung besitzt der Flanschadapter eine Flanschplatte mit mindestens einem darauf stehenden Befestigungssteg, über den der Flanschadapter mit dem Rahmenteil des Verbindungsschuhs verbindbar ist. Der Flanschadapter weist Bohrungen auf, die bevorzugt als Langlöcher ausgeführt sind. Der Vorteil dieser Ausführung als mehrteiliger Verbindungsschuh besteht in der Möglichkeit einer Höhenverstellung des Flanschadapters und damit der Flanschfläche, relativ zu dem Rahmenteil und somit zu dem Steg.

Aus Gründen der Stabilität und insbesondere um eine selbsttragende Verkleidung bereitzustellen, bilden die miteinander verbundenen Verkleidungsteile ringförmig geschlossene Streben, die quer zur Längsrichtung der Gondel verlaufen. Die derart verbundenen Streben verleihen der Verkleidung ausreichende Stabilität gegenüber allen relevanten Lasten.

In einer bevorzugten Ausgestaltung ist mindestens eine Strebe eines Verkleidungsteils mit einer Aufhängung ausgestattet. Die Aufhängung besteht aus einem vollständig in die Strebe eingearbeiteten Basisteil und einem mit dem Basisteil verbundenen und aus der Strebe vorstehenden Verbindungsteil. Bevorzugt ist als Basisteil ein Doppel T-Profil und als Verbindungsteil eine Doppellasche vorgesehen. Durch das Verbindungsteil, das aus der Strebe vorsteht, können die miteinander verbundenen Verkleidungsteile, beispielsweise über Konsolen oder Pfosten, an dem Maschinenträger und/oder Generatorträger der Gondel befestigt werden. Erfindungsgemäß sind die Verkleidungsteile über Verbindungsschuhe miteinander verbunden, die nicht notwendigerweise zu einer Verbindung mit dem Maschinenträger und/oder Generatorträger vorgesehen sind. Zwar ist eine solche Verbindung möglich, aber in einer Weiterbildung der Erfindung sind Aufhängungen in die Verkleidungsteile eingearbeitet, um die Verkleidung mit dem Maschinenträger und/oder Generatorträger der Gondel zu verbinden.

Eine bevorzugte Ausgestaltung der Erfindung wird nachfolgend anhand der Figuren 1 bis 9 näher erläutert. Es zeigen:
- Fig. 1: die Verkleidung für die Gondel einer Windenergieanlage in einer perspektivischen Ansicht von der Seite,
- Fig. 2: einen Schnitt durch die Verkleidung im Bereich einer Dachkante,
- Fig. 3: eine perspektivische Ansicht eines einteiligen Verbindungsschuhs, bestehend aus einer Flanschplatte mit vier Ankerplatten,
- Fig. 4: der in Fig. 3 gezeigte einteilige Verbindungsschuh, eingearbeitet in eine Strebe der Verkleidung,
- Fig. 5: eine perspektivische Ansicht eines mehrteiligen Verbindungsschuhs, bestehend aus einem Rahmen mit vier Ankerplatten, ohne montierten Flanschadapter,
- Fig. 6: eine perspektivische Ansicht des Flanschadapters für den mehrteiligen Verbindungsschuh, wie in Fig. 5 dargestellt,
- Fig. 7: der in den Fign. 5 und 6 gezeigte mehrteilige Verbindungsschuh, eingearbeitet in eine Strebe, mit einem montierten Flanschadapter,
- Fig. 8: eine perspektivische Ansicht einer Aufhängung, bestehend aus einem Basisteil und einer Doppellasche und
- Fig. 9: eine Strebe eines Verkleidungsteils mit einer vorstehenden Doppellasche der in die Strebe eingearbeiteten Aufhängung.

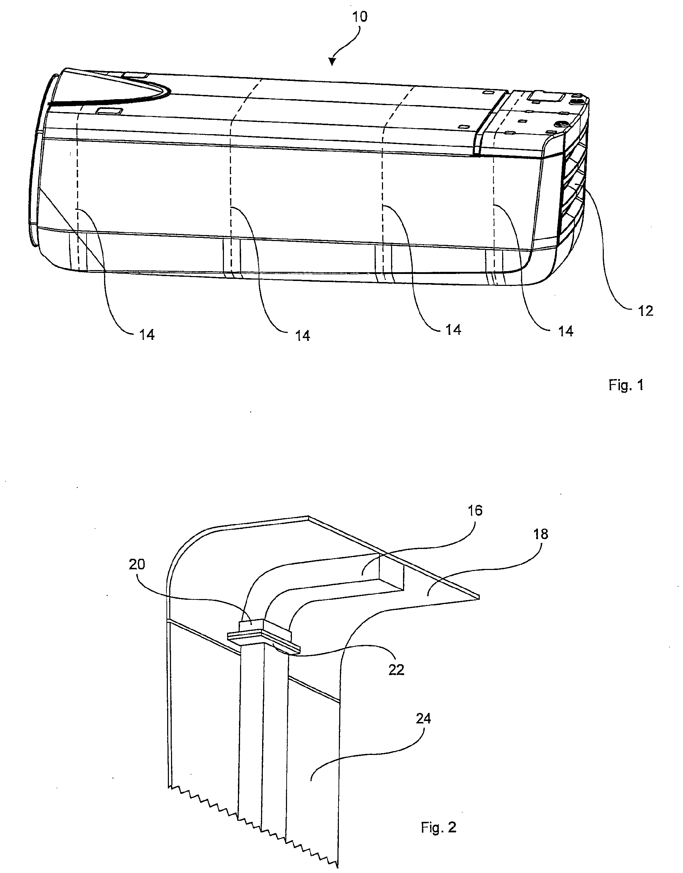

Fig. 1 zeigt in einer perspektivischen Ansicht von der Seite eine Gondelverkleidung 10 für eine Windenergieanlage. Hierbei befindet sich auf der linken Seite der Gondelverkleidung 10 im Wesentlichen der Anschluss für den Rotor der Windenergieanlage (nicht dargestellt), während sich auf der rechten Seite von Fig. 1 Lüftungseinrichtungen 12 zur Abfuhr der Generatorabwärme befinden. Die Gondelverkleidung 10, die innenliegend vier ringförmig umlaufende Streben 14 besitzt, besteht aus glasfaserverstärktem Kunststoff. Die Position der Streben 14 ist in Fig. 1 durch gestrichelte Linien angedeutet. Wie in Fig. 1 und Fig. 2 zu erkennen, verlaufen die Streben 14 flächig in den Wandelementen, wobei die beiden Enden jeder langgestreckten Strebe jeweils einem Rand des Wandelements zugeordnet sind und sich das Wandelement quer zur Längsrichtung der Strebe, bevorzugt beidseitig der Strebe, erstreckt. Die Streben 14 sind von außen nicht sichtbar, da sie auf der Innenseite in die Gondelverkleidung 10 eingearbeitet sind.

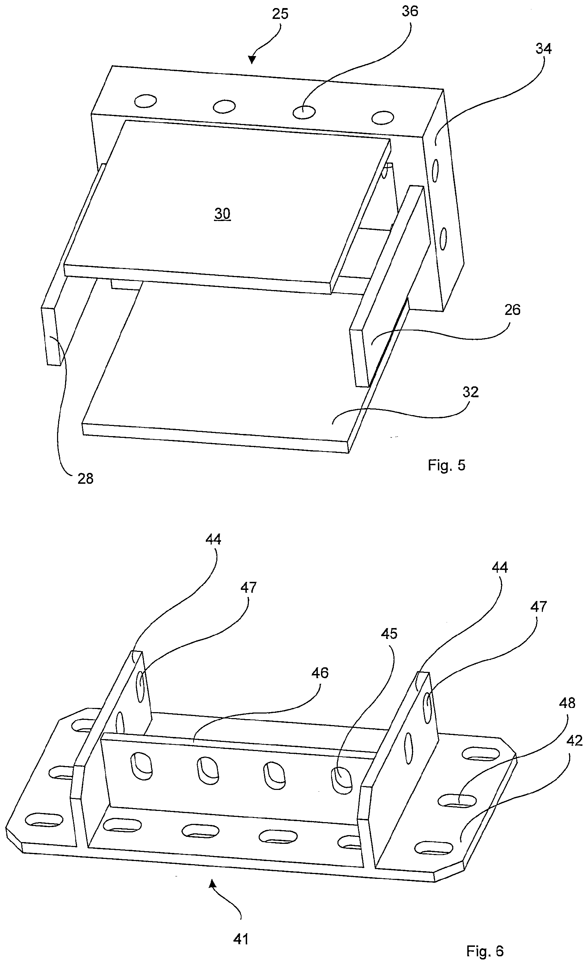

Fig. 2 zeigt in einer perspektivischen Ansicht den Blick von Innen auf den Übergang zwischen der Seitenwand 24 und dem Dachteil 18 der Gondelverkleidung. Deutlich zu erkennen ist eine im Querschnitt rechteckige Strebe 16, die sich von einem Dachteil 18 kommend unter einer 90° Biegung erstreckt. Das Ende der Strebe 16 mündet in einem Verbindungsschuh 20, der über ein Rahmenteil 25 (vgl. Fig. 5) an der Strebe 16 befestigt ist. Der Verbindungsschuh 20 des Dachteils 18 kann wie dargestellt eine Flanschverbindung mit dem angrenzenden Verbindungsschuh 22 der Seitenwand 24 besitzen.

Bei der Erfindung erfolgt die Verbindung der Streben über die Verbindungsschuhe. Diese Verbindung bildet die lastübertragende Verbindung der Gondelverkleidung. Von der lastübertragenden Verbindung zu unterscheiden ist die abdichtende Verbindung zwischen den Verkleidungsteilen. Hier sind grundsätzlich unterschiedliche Ansätze möglich. Beispielsweise können die gegeneinander abzudichtenden Verkleidungsteile eine Überlappung besitzen, sodass beispielsweise das Eindringen von Wasser verhindert wird. Auch ist es möglich, spezielle elastische Dichtungselemente auf den Kanten oder dem Stoß zwischen zwei Kanten der Verkleidungsteile anzuordnen. Wie in Fig. 2 zu erkennen, müssen die Verkleidungsteile nicht in gleicher Höhe wie die Verbindungsschuhe der Gondelverkleidung aneinander stoßen. Die vom Dach kommende Strebe 16 kann beispielsweise vor dem Rand des Dachteils 18 enden, während die in der Wandverkleidung angeordnete Strebe über den Rand der Seitenwand 24 vorsteht.

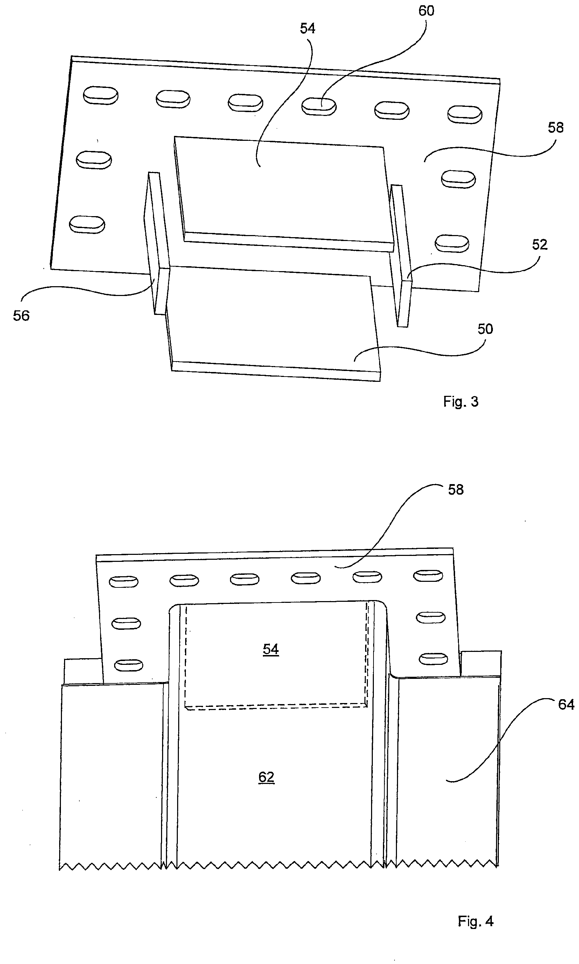

In den Figuren 3 und 4 ist eine bevorzugte Ausgestaltung eines einteiligen Verbindungsschuhs dargestellt, der sich auch mit dem mehrteiligen Verbindungsschuh aus den Figuren 5 bis 7 verbinden lässt. Fig. 3 zeigt, dass der Verbindungsschuh vier Ankerplatten 50, 52, 54, 56 besitzt, die paarweise parallel zueinander in einem Rechteck angeordnet sind. Die Ankerplatten 50 bis 56 stehen senkrecht auf einer Flanschplatte 58, die mit Langlöchern 60 versehen ist. Wie aus Fig. 4 ersichtlich, werden zur Verbindung der Ankerplatten 50 bis 56 mit der Strebe 62 des Verkleidungsteils 64 entsprechende Aussparungen in der Strebe 62 frei gefräst und die Ankerplatten 50 bis 56 in die Aussparungen eingefügt. Nachfolgend wird der Steg durch Auflaminieren von GFK-Schichten weiter aufgebaut. Optional kann zusätzlich ein Verkleben der Ankerplatten 50 bis 56 mit der Strebe 62 und den GFK-Schichten erfolgen. Der so mit der Strebe 62 des Verkleidungsteils 64 verbundene Verbindungsschuh dient der Befestigung an dem Verbindungsschuh eines angrenzenden Verkleidungsteils.

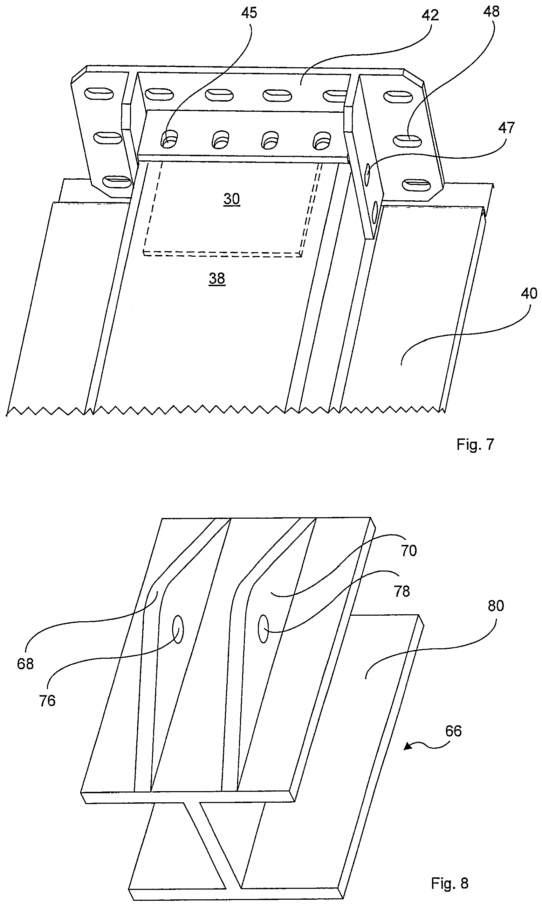

Fig. 5 bis 7 zeigen eine alternative Ausgestaltung eines mehrteiligen Verbindungsschuhs. Fig. 5 zeigt in einer perspektivischen Ansicht ein rechteckiges Rahmenteil 25, das entlang seinem Umfang eine Vielzahl von Bohrungen 36 besitzt. Auf einer Seite des Rahmenteils 25 stehen vier Ankerplatten 26, 28, 30, 32 vor, die paarweise parallel zueinander angeordnet sind. Der Rahmen 34 ist als ein umlaufender Rechteckrahmen ausgeführt, der im Zentrum hohl ist. Wie aus Fig. 7 ersichtlich, erfolgt die Festlegung des Rahmenteils 25 an der Strebe 38, wie bereits vorab beschrieben, indem die Ankerplatten 26 bis 32 in die Strebe 38 eingearbeitet und anschließend einlaminiert werden. In Fig. 7 ist die eingearbeitete Ankerplatte 30 gestrichelt dargestellt. Das so mit der Strebe 38 verbundene Rahmenteil 25 nimmt anschließend einen Flanschadapter 41 auf, der in Fig. 6 dargestellt ist. Der Flanschadapter 41 weist zwei Verbindungsstege 44 und einen senkrecht dazu stehenden Verbindungssteg 46 auf. Die Verbindungsstege 44, 46 des Flanschadapters 41 können mit dem Rahmenteil 25 über die Bohrungen 36, 45 und 47 verschraubt werden, sodass ein Verbindungsschuh entsteht, der eine mit Bohrungen 48 versehene Flanschplatte 42 besitzt.

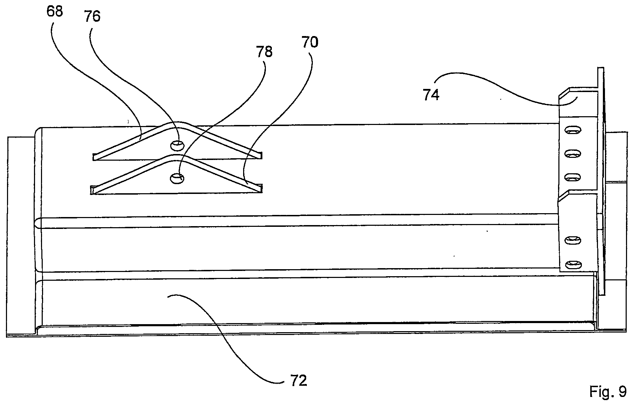

Die vorstehend erläuterten Varianten von Verbindungsschuhen dienen dazu, eine lastübertragende Verbindung zwischen den Verkleidungsteilen zu schaffen, wobei die so miteinander verbundenen Verkleidungsteile an dem Maschinenträger und/oder Generatorträger der Gondel befestigt werden. Hierzu wird die in den Figuren 8 und 9 dargestellte Aufhängung 66 verwendet. Die Aufhängung 66 besteht, wie aus Fig. 8 ersichtlich, aus einem Doppel-T-Profil 80 als Basisteil und zwei vorstehende Laschen 68 und 70 als Verbindungsteil. Wie in Fig. 9 dargestellt, ist das Doppel T-Profil 80 vollständig in die Strebe 72 eingearbeitet, wobei die Laschen 68, 70 aus der Strebe 72 vorstehen. Die Aufhängung 66 kann hierbei beabstandet von einem Ende der Strebe sein, das mit einem Verbindungsschuh 74 ausgestattet ist. Jede der Laschen 68 und 70 steht in Form eines gleichschenkligen Dreiecks aus der Strebe 72 vor. Die Laschen 68 und 70 erstrecken sich parallel zueinander und besitzen Bohrungen 76, 78. Über die Bohrungen 76, 78 kann die Aufhängung 66, beispielsweise über Konsolen oder Pfosten, mit einer die Verkleidung tragenden Struktur verbunden werden. Dies kann beispielsweise der Maschinenträger und/oder Generatorträger sein.

## Patentansprüche

1. Verkleidung (10) für die Gondel einer Windenergieanlage, die mehrere miteinander verbindbare Verkleidungsteile (18, 24) aufweist, wobei die miteinander verbundenen Verkleidungsteile (18, 24) als selbsttragende Verkleidung (10) an einem oder mehreren tragenden Teilen der Gondel befestigt werden können, wobei jedes Verkleidungsteil (18, 24) ein Wandelement aufweist, in das mindestens eine sich von einem ersten Rand des Wandelements zu einem zweiten Rand des Wandelements erstreckende Strebe (16) eingearbeitet ist, die an ihren Enden jeweils einen Verbindungsschuh (20, 22) zur Verbindung mit einem Verbindungsschuh (20, 22) eines benachbarten Verkleidungsteils (18, 24) aufweist, wobei der Verbindungsschuh (20, 22) ein Verankerungselement aufweist, das mindestens zwei in die Strebe hineinragende Ankerplatten (50, 52, 54, 56) aufweist, die in die Strebe (62) eingearbeitet und/oder einlaminiert sind.

2. Verkleidung nach Anspruch 1, **dadurch gekennzeichnet, dass** jedes Verkleidungsteil (18, 24) aus einem Faser-Kunststoff-Verbund, insbesondere einem glasfaserverstärkten Kunststoff besteht.

3. Verkleidung nach Anspruch 1 oder 2, **dadurch gekennzeichnet, dass** der Verbindungsschuh (20, 22) aus Metall, insbesondere aus Stahl besteht.

4. Verkleidung nach Anspruch 1, **dadurch gekennzeichnet, dass** der Verbindungsschuh (20, 22) eine Flanschplatte (58) zur Verbindung mit einem Verbindungsschuh (20, 22) eines angrenzenden Verkleidungsteils (18, 24) aufweist.

5. Verkleidung nach Anspruch 1, **dadurch gekennzeichnet, dass** der Verbindungsschuh (20, 22) ein Rahmenteil (25) aufweist.

6. Verkleidung nach Anspruch 5, **dadurch gekennzeichnet, dass** der Verbindungsschuh (20, 22) zusätzlich einen Flanschadapter (41) aufweist, der mit dem Rahmenteil (25) verbindbar ist.

7. Verkleidung nach Anspruch 6, **dadurch gekennzeichnet, dass** der Flanschadapter (41) eine Flanschplatte (42) und mindestens einen quer dazu stehenden Verbindungssteg (44, 46) aufweist, mit dem der Flanschadapter (41) an dem Rahmenteil (25) des Verbindungsschuhs (20, 22) befestigbar ist.

8. Verkleidung nach einem der Ansprüche 1 bis 7, **dadurch gekennzeichnet, dass** die miteinander verbundenen Verkleidungsteile (18, 24) mehrere ringförmig geschlossene Streben (14) bilden, die quer zur Längsrichtung der Gondel verlaufen.

9. Verkleidung nach einem der Ansprüche 1 bis 8, **dadurch gekennzeichnet, dass** in mindestens einer Strebe eines Verkleidungsteils eine Aufhängung (66) eingearbeitet ist, die ein in die Strebe eingearbeitetes Basisteil (80) und ein damit verbundenes Verbindungsteil aufweist.

10. Verkleidung nach Anspruch 9, **dadurch gekennzeichnet, dass** das Basisteil (80) als ein Doppel T-Profil ausgebildet ist.

11. Verkleidung nach Anspruch 9 oder 10, **dadurch gekennzeichnet, dass** das Verbindungsteil mindestens eine aus der Strebe vorstehende Lasche (68, 70) aufweist.

## Claims

1. Casing (10) for the nacelle of a wind turbine comprising multiple interconnectable casing parts (18, 24), the interconnectable casing parts (18, 24) being attachable as a self-supporting casing (10) to one or more supporting parts of the nacelle, each casing part (18, 24) comprising a wall element having incorporated therein at least one strut (16) extending from a first edge of the wall element to a second edge of the wall element, which has at each of its ends a connecting shoe (20, 22) for connection to a connecting shoe (20, 22) of an adjacent casing part (18, 24), the connecting shoe (20, 22) having an anchoring element which has at least two anchor plates (50, 52, 54, 56) which project into the strut and are incorporated and/or laminated into the strut (62).

2. Casing according to claim 1, **characterized in that** each casing part (18, 24) consists of a fibre-plastic composite, in particular a glass-fibre-reinforced plastic.

3. Casing according to claim 1 or 2, **characterised in that** the connecting shoe (20, 22) consists of metal, in particular of steel.

4. Casing according to claim 1, **characterized in that** the connecting shoe (20, 22) comprises a flange plate (58) for connection to a connecting shoe (20, 22) of an adjacent casing part (18, 24).

5. Casing according to claim 1, **characterized in that** the connecting shoe (20, 22) comprises a frame part (25).

6. Casing according to claim 5, **characterized in that** the connecting shoe (20, 22) additionally has a flange adapter (41) which can be connected to the frame part (25).

7. Casing according to claim 6, **characterized in that** the flange adapter (41) has a flange plate (42) and at least one connecting rib (44, 46) standing transversely thereto, with which the flange adapter (41) can be fastened to the frame part (25) of the connecting shoe (20, 22).

8. Casing in accordance with one of claims 1 to 7, **characterized in that** the interconnected casing parts (18, 24) form a number of annularly closed struts (14) which run transversely to the longitudinal direction of the nacelle.

9. Casing according to one of claims 1 to 8, **characterized in that** a suspension (66) is incorporated in at least one strut of a casing part, which suspension (66) has a base element (80) incorporated in the strut and a connecting element connected thereto.

10. Casing according to claim 9, **characterized in that** the base element (80) is formed as a double T-profile.

11. Casing according to claim 9 or 10, **characterized in that** the connecting part has at least one lug (68, 70) projecting from the strut.

## Revendications

1. Carénage (10) destiné à la nacelle d'une éolienne, qui présente plusieurs panneaux de carénage (18, 24) pouvant être reliés l'un à l'autre, dans lequel les panneaux de carénage (18, 24) reliés l'un à l'autre peuvent être fixés à une ou plusieurs pièces porteuses de la nacelle sous la forme d'un carénage autoportant (10), dans lequel chaque panneau de carénage (18, 24) présente un élément mural, à l'intérieur duquel est incorporée une barre de renfort (16) s'étendant d'un premier bord de l'élément mural à un second bord de l'élément mural, laquelle comporte à ses extrémités respectivement un plot de liaison (20, 22) à relier à un plot de liaison (20, 22) d'un panneau de carénage adjacent (18, 24), dans lequel le plot de liaison (20, 22) présente un élément d'ancrage, qui comporte au moins deux plaques d'ancrage (50, 52, 54, 56) faisant saillie dans la barre de renfort, qui sont incorporées et/ou intégrées par laminage dans la barre de renfort (62).

2. Carénage selon la revendication 1, **caractérisé en ce que** chaque panneau de carénage (18, 24) est constitué d'un matériau composite à base de matière plastique et de fibres, en particulier une matière plastique renforcée de fibres de verre.

3. Carénage selon la revendication 1 ou 2, **caractérisé en ce que** le plot de liaison (20, 22) est constitué de métal, en particulier d'acier.

4. Carénage selon la revendication 1, **caractérisé en ce que** le plot de liaison (20, 22) présente une plaque de bridage (58) à relier à un plot de liaison (20, 22) d'un panneau de carénage adjacent (18, 24).

5. Carénage selon la revendication 1, **caractérisé en ce que** le plot de liaison (20, 22) présente une partie formant un cadre (25).

6. Carénage selon la revendication 5, **caractérisé en ce que** le plot de liaison (20, 22) présente en plus un adaptateur de bride (41), qui peut être relié à la partie formant un cadre (25).

7. Carénage selon la revendication 6, **caractérisé en ce que** l'adaptateur de bride (41) présente une plaque de bridage (42) et au moins une entretoise d'assemblage (44, 46) située transversalement par rapport à celle-ci, avec laquelle l'adaptateur de bride (41) peut être fixé à la partie formant un cadre (25) du plot de liaison (20, 22).

8. Carénage selon l'une des revendications 1 à 7, **caractérisé en ce que** les panneaux de carénage (18, 24) reliés l'un à l'autre forment plusieurs barres de renfort annulaires (14), qui s'étendent transversalement par rapport à l'axe longitudinal de la nacelle.

9. Carénage selon l'une des revendications 1 à 8, **caractérisé en ce qu'**une suspension (66) est incorporée dans au moins une barre de renfort d'un panneau de carénage, qui présente une embase (80) incorporée à la barre de renfort et un élément de liaison relié à celle-ci.

10. Carénage selon la revendication 9, **caractérisé en ce que** l'embase (80) est conçue sous la forme d'un double profilé en T.

11. Carénage selon la revendication 9 à 10, **caractérisé en ce que** l'élément de liaison présente au moins une patte (68, 70) dépassant de la barre de renfort.
